Europäisches Patentamt

European Patent Office

Office européen des brevets

(19)

(11) Publication number: **0 071 530**
**A1**

# EUROPEAN PATENT APPLICATION

(12)

(21) Application number: **82401383.3**

(22) Date of filing: **26.07.82**

(51) Int. Cl.³: **B 60 T 13/16**

(30) Priority: **27.07.81 JP 117380/81**

(43) Date of publication of application:
**09.02.83 Bulletin 83/6**

(84) Designated Contracting States:
**DE FR GB**

(71) Applicant: **NISSAN MOTOR COMPANY, LIMITED**
**No.2, Takara-cho, Kanagawa-ku**
**Yokohama-shi Kanagawa-ken 221(JP)**

(72) Inventor: **Hyakutake, Yasuhiko**
**30-2, Minamiikuta 1-chome Tama-ku**
**Kawasaki-shi Kanagawa-ken(JP)**

(74) Representative: **Beauchamps, Georges et al,**
**Cabinet Z.Weinstein 20, avenue de Friedland**
**F-75008 Paris(FR)**

(54) Hydraulic system.

(57) In a hydraulic system including a hydraulic pump (3), a plurality of series-connected hydraulic devices (1,2), a flow switch (11) and an auxiliary hydraulic pressure supply (10) activated in response to an on-signal output from the flow switch (11) disposed on the downstream side of the last-stage hydraulic device when the amount of fluid flowing therethrough drops below a predetermined value due to abnormal hydraulic pressure drop within the hydraulic system, there is additionally provided a by-pass pipe (30) connected between the upstream side of the flow switch (11) and the upstream side of one (2) of the hydraulic devices (1,2) to increase the minimum amount of fluid flowing therethrough under normal hydraulic pressure. Since the amount of fluid flowing therethrough under abnormally low hydraulic pressure is very small, by increasing this minimum amount under normal pressure, it is possible to reliably activate the auxiliary hydraulic pressure supply by the flow switch (11).

./...

**FIG.4**

1

## Hydraulic system

The present invention relates generally to a hydraulic system, and more particularly to a hydraulic system comprising :
- a hydraulic pump for generating a hydraulic pressure and supplying the generated hydraulic pressure to the hydraulic system ;
- a plurality of hydraulic devices connected in series with respect to said hydraulic pump for performing predetermined functions by virtue of the force applied by the hydraulic pressure ;
- a flow switch, the upstream side of which is connected to the outlet portion of the last-stage device of said hydraulic devices and the downstream side of which is vented to hydraulic rest pressure, said flow switch being turned off to emit an off-signal therefrom when the amount of fluid flowing therethrough exceeds a first predetermined value indicating normal hydraulic pressure within the hydraulic system and turned on to emit an on-signal therefrom when the amount of fluid flowing therethrough drops below a second predetermined value indicating abnormal hydraulic pressure drop within the hydraulic system ;
- an auxiliary hydraulic pressure supply connected to the inlet portion of one of said hydraulic devices for applying a hydraulic pressure to said hydraulic devices in response to the on-signal output from said flow switch ;

so that the auxiliary pressure supply is activated when hydraulic fluid flow downstream of the last-stage hydraulic device drops below a predetermined value.

The background of the present invention will be explained with respect to its application to a hydraulic system used for an automotive vehicle.

As is well-known, in the hydraulic brake system for an automotive vehicle, when the driver depresses a brake pedal the depression force is transmitted to a master cylinder, and hydraulic pressure is supplied from the master cylinder to front and rear wheel brake units, to apply a brake force to the vehicle. Furthermore, in this case, a hydraulic booster is sometimes provided between the brake pedal and the master cylinder in order to multiply the brake pedal depression force and to transmit high hydraulic pressure to the master cylinder. The power steering device is usually activated by hydraulic fluid via the hydraulic booster. That is to say, a hydraulic system is generally arranged by connecting a plurality of various hydraulic devices in series with respect to a hydraulic pump.

On the other hand, in case the hydraulic pressure within the hydraulic system falls for some reason or other, since this can be very dangerous, especially in the case of a hydraulic brake system, there is additionally provided an auxiliary hydraulic pressure supply within the system. This auxiliary hydraulic pressure supply is activated in response to an on-signal output from a flow switch disposed on the downstream side of the last-stage hydraulic device (normally the power steering device). In more detail, when the amount of fluid flowing from the last stage-hydraulic device to the flow switch is reduced because of hydraulic pressure drop, the flow switch detects the change in the amount of fluid flowing therethrough and closes to activate the auxiliary hydraulic pressure supply.

In the prior-art hydraulic system as described above, however, when the power steering device is rotated to its extreme and therefore a control valve in the power steering device is fully closed, the amount of fluid flowing from the control valve to the flow switch can become as small as, for instance, 0.2 l/mn. In this state, however, since the hydraulic system is operating normally, the flow switch must be kept turned off by this small amount of flowing fluid, so that the auxiliary hydraulic pressure supply will not be unnecessarily activated.

On the other hand, when the pressure within the hydraulic system falls abnormally, that is, when the system is operating abnormally, the amount of fluid flowing through the flow switch is further reduced to a level, for instance, less than 0.1 l/mn (although theoretically zero, a small amount of fluid continues to flow through the flow switch).

Therefore, the flow switch is usually so designed as to be turned off when the amount of fluid flowing therethrough exceeds, for instance, 0.2 l/mn and turned on when the amount of fluid drops below, for instance, 0.1 l/mn. As understood from the above-mention-

4

ed numerical values, since the difference between the two numerical values is very small, there arises a problem in that the flow switch may be erroneously turned on to activate the auxiliary hydraulic pressure supply in spite of the fact that the hydraulic system is operating normally, that is, the reliability of on-off operation of the flow-switch is not sufficient.

With these problems in mind, therefore, it is the primary object of the present invention to provide a hydraulic system in which an auxiliary hydraulic pressure supply can be activated more reliably in response to an on-signal output from a flow switch disposed on the downstream side of the last-stage hydraulic device when the pressure within the hydraulic system drops abnormally.

To achieve the above-mentioned object, the hydraulic system according to the present invention comprises a by-pass pipe connected between the upstream side of the flow switch and the upstream side of at least one of a plurality of series-connected hydraulic devices in order to increase the minimum amount of fluid flowing through the flow switch when the hydraulic system is operating normally, in addition to a conventional hydraulic system having a hydraulic pump, a plurality of series-connected hydraulic devices, a flow switch, and an auxiliary hydraulic pressure supply, etc.

Since the amount of fluid flowing through the flow switch when the hydraulic system malfunctions is very small, if the minimum amount of fluid flowing through the flow switch when the hydraulic system is functioning normally is sufficiently increased by the by-pass pipe, it is possible to reliably activate the auxiliary hydraulic pressure supply in response to an on-signal output from the flow switch.

The features and advantages of the hydraulic system according to the present invention over the prior-art hydraulic system will be more clearly appreciated from the following description of the preferred embodiments of the invention taken in conjunction with the accompanying drawings in which like reference numerals designate the same or similar elements or sections throughout the figures thereof and in which :

Figure 1 is a schematic block diagram of a typical prior-art hydraulic system used for an automotive vehicle.

Figure 2 is an enlarged cross-sectional view of a prior-art hydraulic booster used with the hydraulic system for an automotive vehicle shown in Figure 1.

Figure 3 is a schematic block diagram of a first embodiment of the hydraulic system used for an automotive vehicle according to the present invention.

Figure 4 is a schematic block diagram of a second embodiment of the hydraulic system used for an automotive vehicle according to the present invention.

Figure 5 is a schematic block diagram of a third embodiment of the hydraulic system used for an automotive vehicle according to the present invention.

Figure 6 is a schematic block diagram of a fourth embodiment of the hydraulic system used for an automotive vehicle according to the present invention. And

Figure 7 is a schematic block diagram of a fifth embodiment of the hydraulic system used for an automotive vehicle according to the present invention.

To facilitate understanding of the present invention, a brief reference will be made to a prior-art hydraulic system used for an automotive vehicle, with reference to the attached drawings.

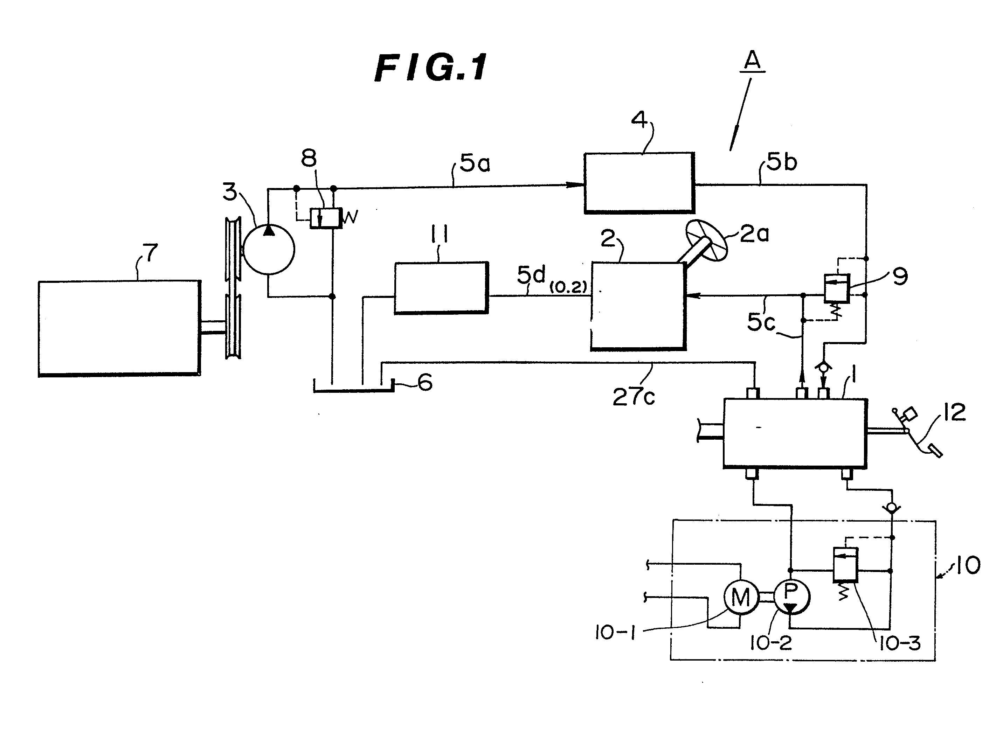

Figure 1 shows a schematic block diagram of a typical prior-art hydraulic system used for an automotive vehicle. In the figure, the reference numeral 1 denotes a hydraulic booster for multiplying pressure, the reference numeral 2 denotes a power steering device for power-steering front wheels, and the reference numeral 3 denotes a hydraulic pump for generating hydraulic pressure for the system. In addition, in an automotive vehicle provided with an antiskid system, an actuator 4 is provided for preventing the vehicle from skidding (sliding to the side with the wheels locked). The reference numeral 6 denotes a reservoir tank, the reference numeral 7 denotes an engine for driving the hydraulic pump 3, the reference numeral 8 denotes a relief valve for the hydraulic pump 3 to limit the maximum hydraulic pressure within the entire hydraulic system A, and the reference numeral 9 denotes another relief valve for the hydraulic booster to limit the maximum hydraulic pressure within the hydraulic booster 1.

The hydraulic pressure from the hydraulic pump 3 is supplied to a first hydraulic device, namely the antiskid actuator 4, a second hydraulic device, namely the hydraulic booster 1, and a third hydraulic device, namely a power steering device 2, in series via communication pipes 5a, 5b and 5c, respectively, the latter two discharging into the reservoir tank 6 via a communication pipe 5d connected to the third (last) stage hydraulic device (the power steering device) and a drain pipe 27c connected to the hydraulic booster 1.

In the above-mentioned hydraulic booster 1, there is additionally provided an auxiliary hydraulic pressure supply 10 for ensuring the function of the hydraulic booster 1 in case the pressure of the hydraulic system drops and therefore sufficient hydraulic pressure is not applied to the hydraulic booster 1. The auxiliary hydraulic pressure supply 10 includes a motor 10-1, a hydraulic pump 10-2, and a relief valve 10-3.

In order to control activation of this auxiliary hydraulic pressure supply 10, there is provided a flow switch midway along a communication pipe 5d connecting the last-stage hydraulic device (power steering device 2) to the reservoir tank 6. The outlet portion of the flow switch is vented to atmospheric pressure. The flow switch 11 can detect the amount of fluid flowing therethrough under atmospheric pressure and is turned on when the amount of flowing fluid drops below a predetermined value due to pressure drop within the hydraulic system A. The reason why the flow switch is connected to the last-stage hydraulic device via the communication pipe 5d is that the pressure of the last stage device is relatively low and therefore it is possible to lower the limit of pressure resistance of the flow switch, that is, to reduce the cost thereof.

In such a prior-art hydraulic system A, however, when a steering wheel 2a is rotated to its extreme end and thereby a control valve unit (not shown) disposed in the last-stage power steering device 2 is fully closed, the amount of fluid flowing from the control valve unit to the flow switch 11 may become as small as, for instance, about 0.2 liter/minute (referred to simply as 1/mn, hereinafter) even when the hydraulic system is operating normally, this amount being considered as leakage from the control valve.

On the other hand, when the pressure within the hydraulic system falls abnormally due to trouble, although the amount of flowing fluid should theoretically be zero, actually, a small amount of fluid remaining within the lines after a malfunction will flow through the flow switch 11.

Therefore, the flow switch 11 is usually so designed as to be turned off when the amount of fluid flowing therethrough exceeds, for instance, 0.2 1/mn and turned on when the amount of fluid flowing therethrough drops below, for instance, 0.1 1/mn. As understood by these numerical values, the difference between the two is too small ; as a result, there arises a problem in that the flow switch can be erroneously turned on to activate the auxiliary hydraulic pressure supply 10 in spite of the fact that the hydraulic system is operating normally ; in other words, the reliability of flow switch operation is not sufficiently high, because of the very tight flow range between on and off operations of the flow switch.

Additionally, the reference numeral 27c denotes a drain pipe of the hydraulic booster 1. To explain the drain pipe 27c, it may be necessary to explain the structure of the conventional hydraulic booster 1.

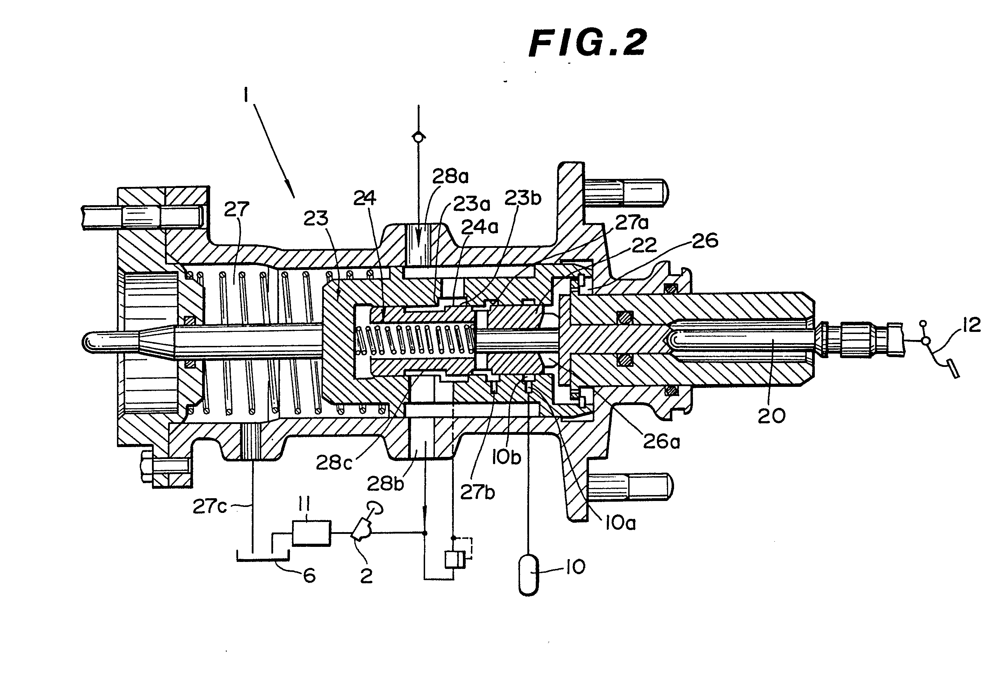

Figure 2 is an enlarged cross-sectional view of the conventional hydraulic booster 1. As shown in the figure, when a brake pedal 12 is not depressed, a hydraulic pressure is directly transmitted from an inlet port 28a to an outlet port 28b via an annular groove 28c formed on the outer circumferential surface of a throttle valve 24. However, when the brake pedal 12 is depressed by a driver, an input rod 20 is shifted inwardly to move a spool (operation valve) 22 and a throttle valve 24 with respect to a power piston 23, so that a passage-way between a shoulder portion 23a of the power piston 23 and a land portion 24a of the throttle valve 24 is throttled, resulting in hydraulic pressure on the inlet side of the throttle valve 24. When the throttle valve 24 is further shifted, since another passage-way formed between the land portion 24a of the throttle valve 24 and another shoulder portion 23b of the power piston 23 is opened gradually, hydraulic pressure is introduced via this passage-way into a booster chamber 26 to hydraulically urge the power piston 23 to the left in Figure 2.

When the brake pedal 12 is depressed deeply by a driver, since the spool 22 is shifted leftwardly to the extent that radially-extending passage-way 26a communicates with an annular groove 10b formed in the inner circumferential surface of the power piston 23 and since the annular groove 10b communicates with a through-hole 10a, additional pressure is supplied from the auxiliary hydraulic pressure supply 10 to the booster chamber 26 via the through-hole 10a and the annular groove 10b, in case the pressure within the hydraulic system A drops abnormally, in order to ensure the function of the hydraulic booster.

The reference numeral 27 denotes a drain chamber into which hydraulic fluid drains via an annular groove 27a formed on the inner circumferential surface of the power piston 23, a radially-extending passage-way 27b formed in the power piston 23 and a longitudinally extending groove (not shown) formed in the outer circumferential surface of the power piston 23. The drained fluid in the drain chamber 27 is passed to the reservoir tank 6 via the drain pipe 27c.

In view of the above description, reference is now made to a first embodiment of the hydraulic system used for an automotive vehicle according to the present invention.

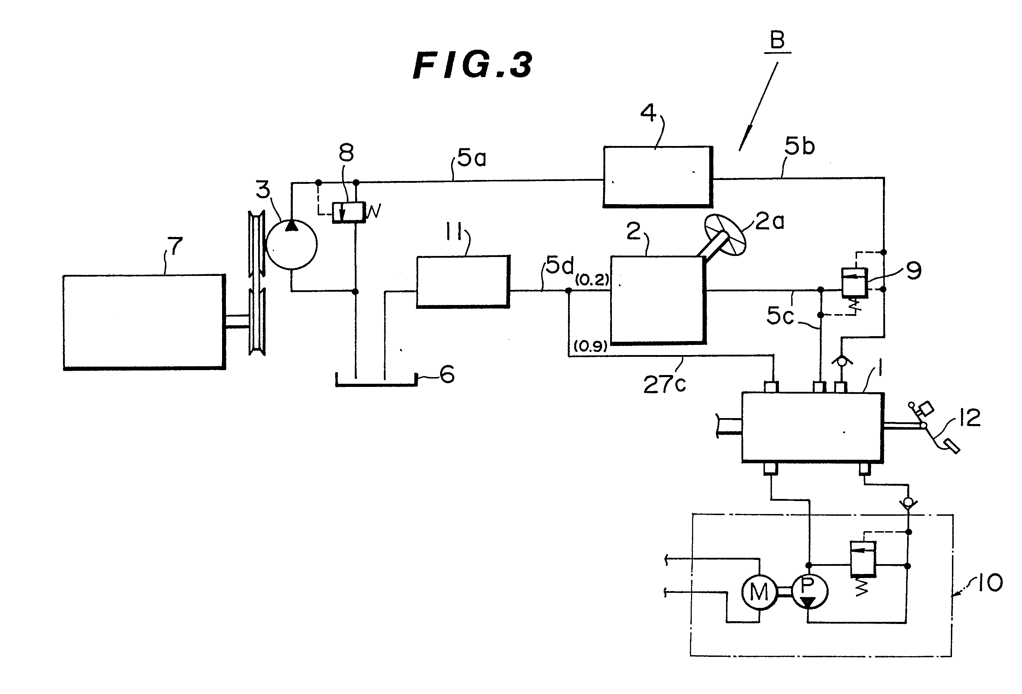

In figure 3, the hydraulic system B used for an automotive vehicle is almost the same as the one A shown in figure 1, except for the connection point of the drain pipe 27c from the hydraulic booster 1. Therefore, the description of the devices is omitted herein.

In this first embodiment, the drain pipe 27c from the hydraulic booster 1 is connected to the communication pipe 5d between the flow switch 11 and the last-stage power steering device 2. In other words, the drain pipe 27c is connected so as to by-pass the last-stage power steering device 2.

Therefore, the hydraulic fluid drained from the drain chamber 27 (shown in figure 2) of the hydraulic booster 1 is always flowing through the flow switch 11. The amount of fluid flowing through the flow switch 11 is, for instance, about 0.9 1/mn (a value obtained by actual measurement). As a result, even when the control valve section of the power steering device 2 is fully closed and therefore the amount of fluid flowing out of the power steering device 2 becomes as small as 0.2 1/mn (the minimum amount when the system is operating normally), it is possible to pass a relatively large amount of fluid 10 (0.2 + 0.9 = 1.1 1/mn), through the flow switch 11.

Since the minimum amount of fluid flowing through the flow switch 11 under normal hydraulic pressure is at least 1.1 1/mn, it is possible to determine the amount of flowing fluid required to turn off the flow switch 11 to be, for instance, about 1.1 1/mn (0.2 1/mn in the prior-art system) and that required to turn on the flow switch 11 to be, for instance, about 0.5 1/mn (0.1 1/mn in the prior-art system) ; as a result, it is possible to securely detect when the pressure within the hydraulic system B falls abnormally to as far as about 0.1 1/mn.

In short, since it is possible to extend the flow range between on and off operations of the flow switch 11, the auxiliary pressure supply can be activated reliably only when the hydraulic system B is operating abnormally.

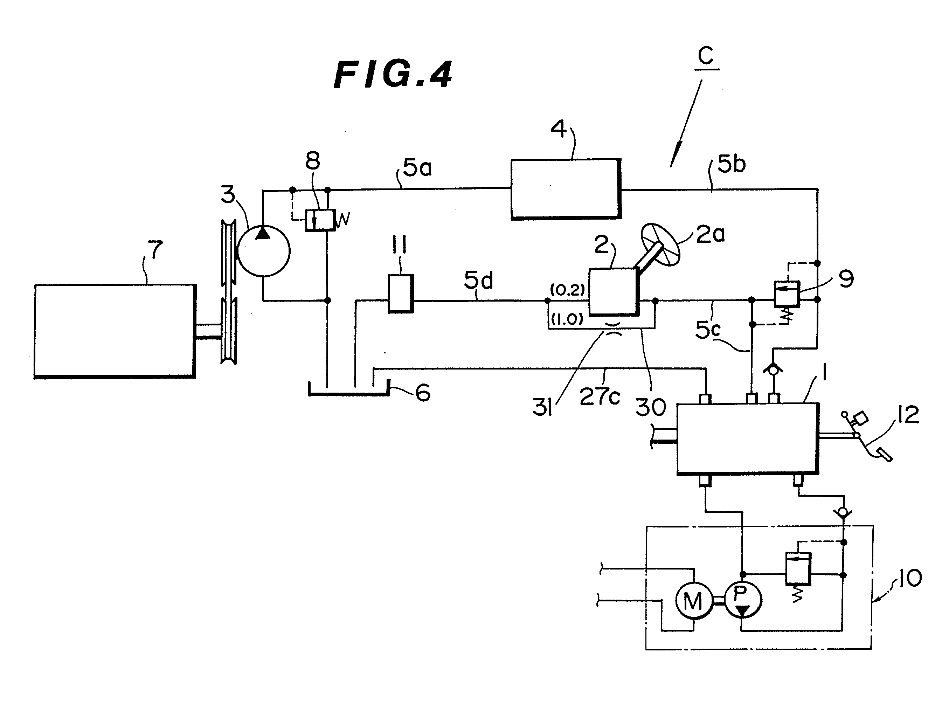

Figure 4 shows a second embodiment of the hydraulic system used for an automotive vehicle according to the present invention.

In figure 4, the hydraulic system C used for an automotive vehicle is almost the same as the one A shown in figure 1, except for a power steering by-pass pipe 30 connected between the upstream side and the downstream side of the power steering device 2. Therefore, description of the devices is omitted herein.

In this second embodiment, an additional power steering by-pass pipe 30 provided with a venturi 31 is connected across the power steering device 2 so as to by-pass the device 2. Therefore, the hydraulic fluid flowing through the venturi 31 formed in the power steering by-pass pipe 30 is always flowing through the flow switch 11. Although the amount of fluid flowing through the venturi 31 can be adjusted depending upon the diameter thereof, the rate of flow therethrough would preferably be about 1.0 l/mn. As a result, even when the control valve section of the power steering device 2 is fully closed and therefore the amount of fluid exiting from the power steering device 2 is as little as 0.2 l/mn (the minimum amount when the system is operating normally), it is possible to pass a relatively large amount of fluid (0.2 + 1.0 = 1.2 l/mn) through the flow switch 11.

Since the minimum amount of fluid flowing through the flow switch 11 under normal hydraulic pressure is at least 1.2 1/mn, it is possible to determine the rate of flow required to turn off the flow switch 11 to be, for instance, about 1.2 1/mn (0.2 1/mn in the prior-art system) and that required to turn on the flow switch 11 to be, for instance, about 0.5 1/mn (0.1 1/mn in the prior-art system) ; as a result, it is possible to securely detect when the pressure within the hydraulic system C falls to a level of about 0.1 1/mn. Since the flow range between on and off operations of the flow switch 11 is large, the auxiliary hydraulic pressure supply 10 can be activated reliably only when the hydraulic system C is operating abnormally.

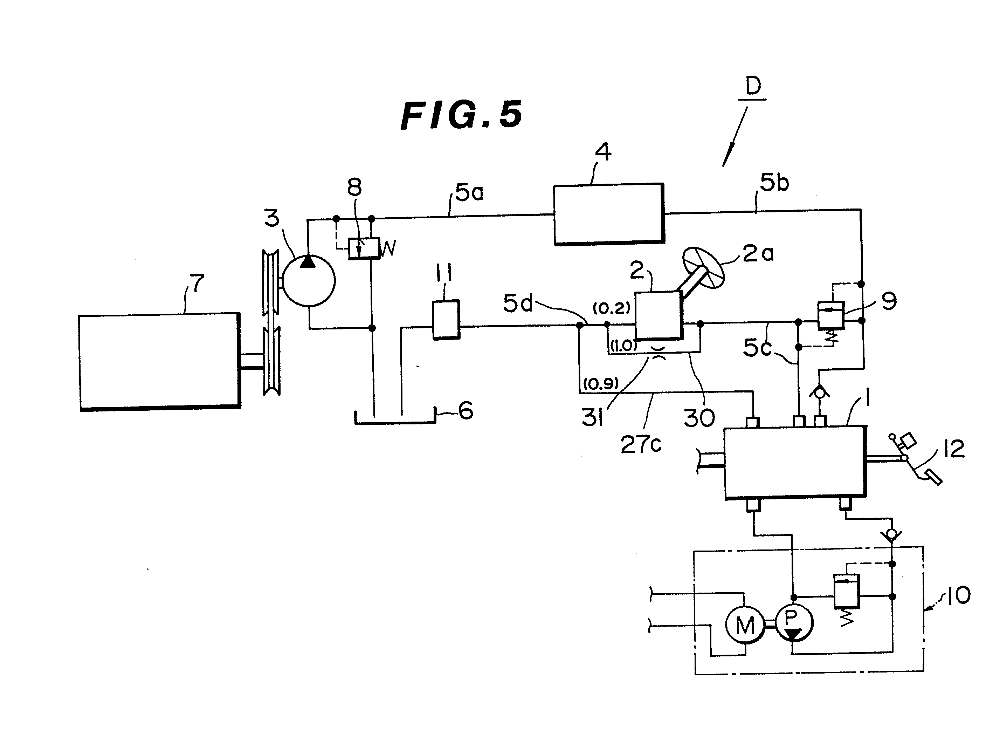

Figure 5 shows a third embodiment of the hydraulic system used for an automotive vehicle according to the present invention.

In figure 5, the hydraulic system D used for an automotive vehicle is also almost the same as the one A shown in figure 1, except for the connection point of the drain pipe 27c from the hydraulic booster 1 and a power steering by-pass pipe 30 connected between the upstream side and downstream side of the power steering device 2. Therefore, description of the devices is omitted herein. In essence, this third embodiment is a combination of the first and second embodiments.

Therefore, the hydraulic fluid draining from the drain chamber 27 (shown in figure 2) of the hydraulic booster 1 and that flowing through the venturi 31 formed in the power steering by-pass pipe 30 is always flowing through the flow switch 11. Although the amount of fluid flowing through the venturi 31 can be adjusted depending upon the diameter thereof, when the amount of fluid flowing through the venturi 31 is, for instance, about 1.0 1/mn and that flowing through the drain pipe 27c is, for instance, about 0.9 1/mn, the amount of fluid flowing through the flow switch 11 will be at least about 2.1 1/mn. As a result, even when the control valve section of the power steering device 2 is fully closed and therefore the amount of fluid flowing out of the power steering device 2 may be as small as 0.2 1/mn (the minimum amount when the system is operating normally), it is possible to pass a large amount of fluid (0.2 + 0.9 + 1.0 = 2.1 1/mn) through the flow switch 11.

Since the minimum amount of fluid flowing through the flow switch 11 under normal hydraulic pressure is 2.1 1/mn, it is possible to determine the amount of flowing fluid required to turn off the flow switch 11 to be, for instance, about 2.1 1/mn (0.2 1/mn in the prior-art system) and that required to turn on the flow switch 11 to be, for instance, about 0.5 1/mn (0.1 1/mn in the prior-art system) ; as a result, it is possible to more securely detect when the pressure within the hydraulic system D falls to a level of about 0.1 1/mn. Since the flow range between on and off operations of the flow switch 11 is large, the auxiliary hydraulic pressure supply 10 can be activated more reliably only when the hydraulic system D is operating abnormally.

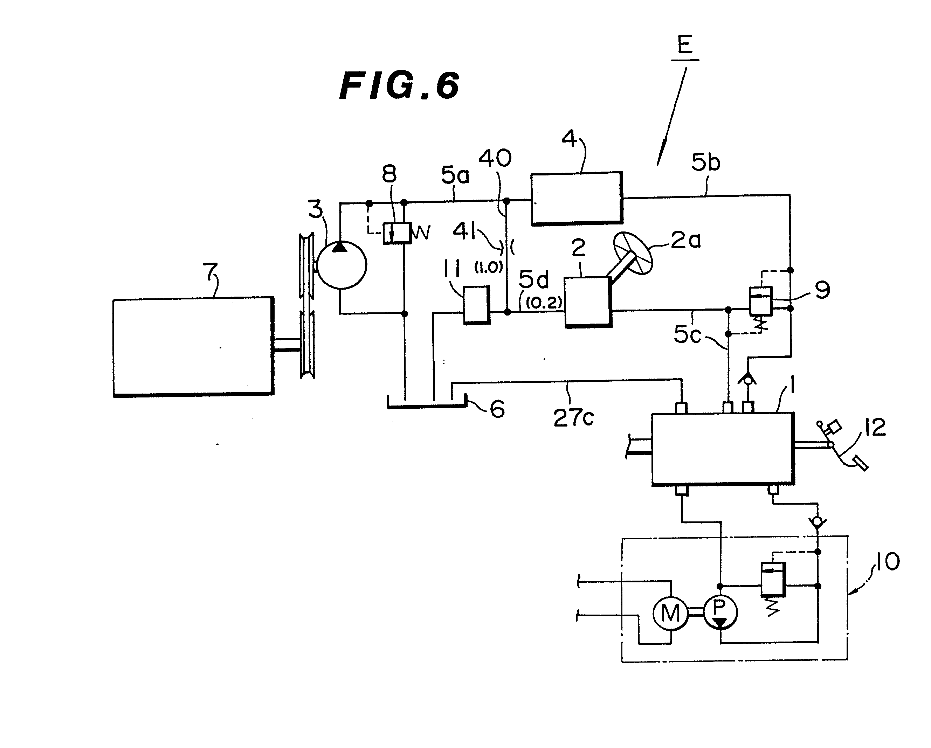

Figure 6 shows a fourth embodiment of the hydraulic system used for an automotive vehicle according to the present invention.

In figure 6, the hydraulic system E used for an automotive vehicle is also almost the same as the one A shown in figure 1, except for a hydraulic system by-pass pipe 40, one end of which is connected to the communication pipe 5a disposed between the relief valve 8 and the actuator 4 and the other end of which is connected to the communication pipe 5d disposed between the flow switch 11 and the power steering device 2. Therefore, description of the devices is omitted herein.

In this fourth embodiment, an additional hydraulic system by-pass pipe 40 provided with a venturi 41 is connected directly between the regulated output of the pump 3 and the flow switch 11 so as to by-pass the rest of system E. Therefore, the hydraulic fluid flowing through the venturi 41 in the hydraulic system by-pass pipe 40 is always flowing through the flow switch 11. Although the amount of fluid flowing through the venturi 41 can be adjusted depending upon the diameter thereof, the rate of fluid flow would preferably be about 1.0 l/mn. As a result, even when the control valve section of the power steering device 2 is fully closed and therefore the amount of fluid exiting from the power steering device 2 may be as little as 0.2 l/mn (the minimum amount when the system is operating normally), it is possible to pass a relatively large amount of fluid (0.2 + 1.0 = 1.2 l/mn) through the flow switch 11.

In the same way as in the second embodiment, it is possible to determine the rate of flow required to turn off the flow switch 11 to be about 1.2 l/mn and that required to turn on the flow switch 11 to be about 0.5 l/mn.

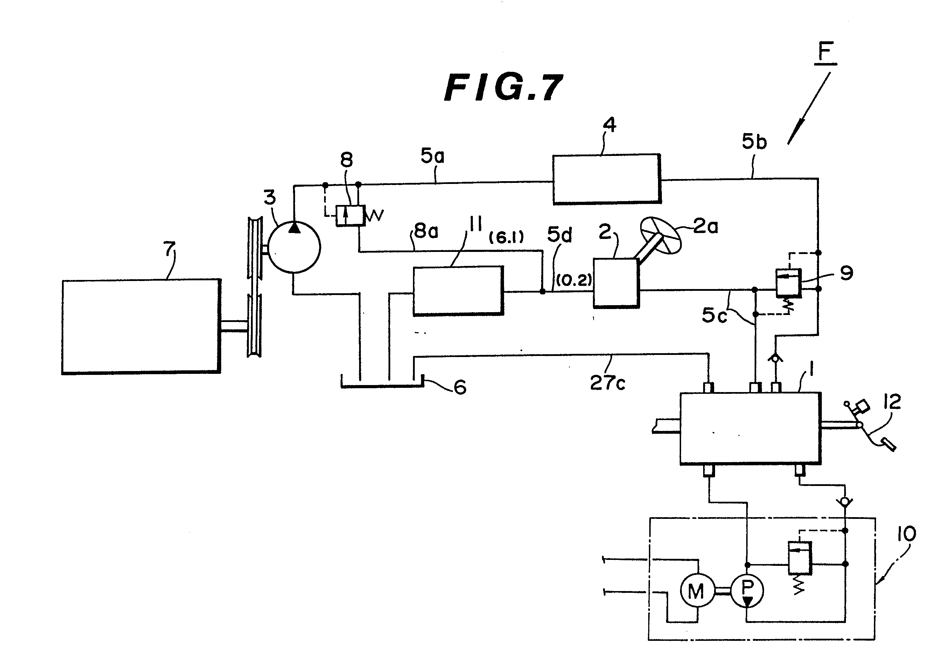

Figure 7 shows a fifth embodiment of the hydraulic system used for an automotive vehicle according to the present invention.

In Figure 7, the hydraulic system F used for an automotive vehicle is almost the same as the one A shown in Figure 1, except for the connection point of a relief pipe 8a connected to the relief valve 8 for limiting the maximum hydraulic pressure within the hydraulic system F.

In this fifth embodiment, the relief pipe 8a from the relief valve 8 is connected to the communication pipe 5d between the flow switch 11 and the last-stage power steering device 2. In other words, the relief pipe 8a is connected so as to by-pass the rest of hydraulic system F without being connected directly to the downstream side of the hydraulic pump 3.

Therefore, the hydraulic fluid from the relief valve 8 is always flowing through the flow switch 11. Since the amount of fluid flowing through the relief valve 8 may be as great as, for instance, about 6.1 l/mn, even if the amount of flowing fluid required to turn off the flow switch 11 is determined to be, for instance, about 3.0 l/mn (approximately half of 6.1 l/mn) and that required to turn on the flow switch 11 is determined to be, for instance, about 0.5 l/mn, it is possible to obtain a large flow range between on and off operations of the flow switch 11 ; that is, the auxiliary hydraulic pressure supply 10 can be activated more reliably only when the hydraulic system F is operating abnormally.

By the way, the embodiments of the hydraulic system for an automotive vehicle according to the present invention have been described in terms of empirical numerical values for the amounts of fluid flowing through various portions or sections in the hydraulic systems for assistance in explaining the invention ; however, these numerical values, of course, change according to the type and model of the hydraulic system.

In addition, the embodiments of the hydraulic system according to the present invention have been described by illustrating only the cases used for an automotive vehicle ; however, it is, of course, possible to apply the present invention generally to other hydraulic systems in which a plurality of hydraulic devices are connected in series with respect to the hydraulic pump and a flow switch is provided on the downstream side of the last-stage device in order to activate an auxiliary hydraulic pressure supply in case of hydraulic pressure drop.

As described  above, in the hydraulic system according to the present invention in which a plurality of hydraulic devices are connected in series with respect to the hydraulic pump and a flow switch is provided on the downstream side of the last-stage device in order to activate an auxiliary hydraulic pressure supply when the pressure within the system falls, since there is provided a by-pass pipe one end of which is connected to the upstream side of the flow switch and the other end of which is connected to one of the upstream sides of a plurality of the hydraulic devices including at least the last-stage hydraulic device, even if the last-stage hydraulic device employs its full pressure load and thereby the amount of fluid to be passed through the flow switch is reduced almost to zero, it is possible to pass a predetermined amount of hydraulic fluid through the flow switch via the by-pass pipe, with the result that it is possible to extend the detection flow range between "on" operation (under an abnormal low pressure) and "off" operation (under a normal pressure) of the flow switch ; in other words, the reliability of activating the auxiliary hydraulic pressure supply can be improved markedly.

It will be understood by those skilled in the art that the foregoing description is in terms of preferred embodiments of the present invention wherein various changes and modifications may be made without departing from the spirit and scope of the invention, as set forth in the appended claims.

Claims

1. Hydraulic system comprising :
- a hydraulic pump for generating a hydraulic pressure and supplying the generated hydraulic pressure to the hydraulic system ;
- a plurality of hydraulic devices connected in series with respect to said hydraulic pump for performing predetermined functions by virtue of the force applied by the hydraulic pressure ;
- a flow switch, the upstream side of which is connected to the outlet portion of the last-stage device of said hydraulic devices and the downstream side of which is vented to hydraulic rest pressure, said flow switch being turned off to emit an off-signal therefrom when the amount of fluid flowing therethrough exceeds a first predetermined value indicating normal hydraulic pressure within the hydraulic system and turned on to emit an on-signal therefrom when the amount of fluid flowing therethrough drops below a second predetermined value indicating abnormal hydraulic pressure drop within the hydraulic system ;
- an auxiliary hydraulic pressure supply connected to the inlet portion of one of said hydraulic devices for applying a hydraulic pressure to said hydraulic devices in response to the on-signal output from said flow switch ;
and characterized by a by-pass pipe, one end of which is connected to the upstream side of said flow switch and the other end of which is connected to the upstream side of at least one of said hydraulic devices, whereby the amount of fluid flowing through said flow switch can be increased even when the hydraulic pressure within the hydraulic system falls abnormally.

2. Hydraulic system as set forth in claim 1, characterized in that the last stage of said hydraulic devices is a power steering device for steering front wheels of an automotive vehicle and a hydraulic device prior to said last-stage hydraulic device is a hydraulic booster for applying a multiplied hydraulic pressure to a brake unit in response to the depression of a brake pedal, said auxiliary hydraulic pressure supply being connected to the upstream side of said hydraulic booster.

3. Hydraulic system as set forth in claim 2, characterized in that said by-pass pipe is a drain pipe of said hydraulic booster connected to a drain chamber of saic hydraulic booster for draining the hydraulic fluid from within said hydraulic booster.

4. Hydraulic system as set forth in claim 2, characterized in that said by-pass pipe is a power steering by-pass pipe connected directly between the upstream and downstream sides of said power steering device.

5. Hydraulic system as set forth in claim 4, characterized in that said power steering by-pass pipe is provided with a venturi.

6. Hydraulic system as set forth in claim 2, characterized in that said by-pass pipe is a hydraulic system by-pass pipe, one end of which is connected to the outlet portion of said hydraulic pump and the other end of which is connected to the upstream side of said flow switch.

7. Hydraulic **system** as set forth in claim 6, characterized in that said hydraulic system by-pass pipe is provided with a venturi.

8. Hydraulic system as set forth in any one of claims 1 to 4 and 6, characterized in that it further comprises a relief valve, the inlet portion of which is connected to the outlet portion of said hydraulic pump and the outlet portion of which is connected to the upstream side of said flow switch.

FIG.1

1/7

0071530

# FIG.2

FIG.3

# FIG.4

0071530

**FIG.5**

**FIG.6**

# FIG.7

0071530

European Patent
Office

**EUROPEAN SEARCH REPORT**

0071530

Application number

EP 82 40 1383

## DOCUMENTS CONSIDERED TO BE RELEVANT

| Category | Citation of document with indication, where appropriate, of relevant passages | Relevant to claim | CLASSIFICATION OF THE APPLICATION (Int. Cl. ³) |
|---|---|---|---|
| | --- | | B 60 T 13/16 |
| A | FR-A-2 143 349 (THE BENDIX CORP.) <br> * the whole document; figures * | 1,8 | |
| | --- | | |
| A | US-A-4 196 592 (NOMURA) <br> * column 3, lines 6 to 10; column 4, lines 57 to 63; figure 1 * | 1 | |
| | --- | | |
| A | US-A-3 762 492 (RON) | 1 | |
| | --- | | |
| A | GB-A-1 465 714 (THE WEATHERHEAD COMPANY) | 1 | |
| | ----- | | |

TECHNICAL FIELDS
SEARCHED (Int. Cl. ³)

B 60 T 13/00

The present search report has been drawn up for all claims

| Place of search <br> THE HAGUE | Date of completion of the search <br> 01-11-1982 | Examiner <br> BRAEMS C.G.I. |
|---|---|---|